# EUROPÄISCHE PATENTSCHRIFT

(11) **EP 2 839 348 B1**
(45) Veröffentlichungstag und Bekanntmachung des Hinweises auf die Patenterteilung: **14.09.2016**
(21) Anmeldenummer: 12716258.4
(22) Anmeldetag: 20.04.2012
(51) Int. Cl.: G05B 19/042

(54) **VERFAHREN ZUM KONFIGURIEREN EINES AUTOMATISIERUNGSSYSTEMS**
METHOD FOR CONFIGURING AN AUTOMATION SYSTEM
PROCÉDÉ DE CONFIGURATION D'UN SYSTÈME D'AUTOMATISME

(43) Veröffentlichungstag der Anmeldung: 25.02.2015
(73) Patentinhaber: Festo AG & Co. KG, 73734 Esslingen (DE)
(72) Erfinder: MÜLLER, Jürgen, 70794 Filderstadt (DE); ULLMANN, Jörg, 73733 Esslingen (DE)
(74) Vertreter: Patentanwälte Magenbauer & Kollegen Partnerschaft mbB
(86) Internationale Anmeldenummer: PCT/EP2012/001718
(87) Internationale Veröffentlichungsnummer: WO 2013/156043

(56) Entgegenhaltungen:
- EP-A1- 2 224 297
- EP-A2- 2 182 418
- GB-A- 2 403 043

## Beschreibung

Die Erfindung betrifft ein Verfahren zum Konfigurieren eines Automatisierungssystems, das eine Maschinensteuerung, wenigstens eine mit der Maschinensteuerung verbundene Steuerungseinrichtung, an die wenigstens eine Steuerungseinrichtung angeschlossene Aktorsteuerungen, insbesondere Motorsteuerungseinrichtungen, sowie mit den Aktorsteuerungen verbundene Aktoren umfasst, wobei die Maschinensteuerung in einer Leitebene angesiedelt ist und Steuerbefehle an die Steuerungseinrichtung ausgibt und wobei die Steuerungseinrichtung mit den Aktorsteuerungen und den damit verbundenen Aktoren eine Feldebene bildet, in der die Steuerbefehle in Aktorbewegungen umgesetzt werden. Ferner betrifft die Erfindung eine Motorsteuerungseinrichtung.

Die EP 2 182 418 A2 offenbart ein Verfahren zum Zugreifen auf ein Funktionsmodul eines Automatisierungssystems, wobei das Automatisierungssystem ein übergelagertes Gerät und wenigstens ein diesem untergelagertes Gerät umfasst und wobei das Funktionsmodul als Teil des wenigstens einen untergelagerten Geräts und zum Ausführen wenigstens einer Gerätefunktion ausgebildet ist, umfassend die Schritte: Bereitstellen einer Zugriffsapplikation mit wenigstens einer Applikationsfunktion auf dem übergelagerten Gerät, wobei die Applikationsfunktion zum Zugreifen auf ein beliebiges untergelagertes Gerät und dessen Funktionsmodul anpassbar ist und wobei die Zugriffsapplikation wenigstens ein erstes Applikationsmodul umfasst; Bereitstellen eines Bediengeräts, welches Ein- und Ausgabeeinrichtungen zur Bedienung durch einen Benutzer umfasst; Verbinden des Bediengeräts mit dem übergelagerten Gerät über eine Kommunikationsverbindung; Ausführen des wenigstens einen ersten Applikationsmoduls auf dem übergelagerten Gerät; automatisches Bereitstellen einer Bedienschnittstelle der Zugriffsapplikation an dem Bediengerät; Auswählen einer bestimmten Applikationsfunktion mittels der Bedienschnittstelle; Auswählen oder Eingeben einer ein bestimmtes untergelagertes Gerät identifizierenden Information mittels der Bedienschnittstelle; Bereitstellen von zu der ausgewählten oder eingegebenen Identifizierungsinformation passenden, das bestimmte untergelagerte Gerät detailliert beschreibenden Daten; automatisches Anpassen der ausgewählten Applikationsfunktion und der Bedienschnittstelle für einen Zugriff auf das bestimmte untergelagerte Gerät und dessen Funktionsmodul unter Ansprechen auf die bereitgestellten, das bestimmte untergelagerte Gerät detailliert beschreibenden Daten; Übertragen von Daten zwischen dem Bediengerät und dem übergelagerten Gerät, sowie dem bestimmten untergelagerten Gerät nach dessen Anschalten an das Automatisierungssystem.

Aus der EP 2 182 418 A2 ist ein Verfahren zum Zugreifen auf ein Funktionsmodul eines Automatisierungssystems bekannt, wobei das Automatisierungssystem ein übergelagertes Gerät und wenigstens ein diesem untergelagertes Gerät umfasst und wobei ein Funktionsmodul als Teil des untergelagerten Geräts und zum Ausführen wenigstens einer Gerätefunktion ausgebildet ist.

Die GB 2403043 A offenbart ein Verfahren zum Konfigurieren einer drahtlos aktivierbaren Feldvorrichtung, wobei übertragene Feldgeräteidentifikationsinformationen eine Vorrichtungskennung enthalten können. Anschließend ist ein Vergleichen der Feldgeräteidentifikationsinformationen mit einer Konfigurationsdatenbank vorgesehen, in der dem Feldgerät zugehörige Konfigurationsinformationen gespeichert sind. Nachfolgend werden die Konfigurationsinformationen an das Feldgerät über wenigstens eine drahtlose Kommunikationsverbindung gesendet, um das Feldgerät zu konfigurieren.

Aus der EP2224297 A1 ist ein Verfahren bekannt, bei dem Funktionen eines mehrere vernetzte Steuerungseinheiten umfassenden Automatisierungssystems durch Dienste von den Steuerungseinheiten bereitgestellt werden. Komponenten eines Dienstes werden über eine einheitliche Konfigurationsschnittstelle durch eine lokale Dienstkonfigurationseinheit zu einem Dienst verknüpft. Die Dienste werden mittels Konfigurationsdaten konfiguriert und aktiviert. Die Konfigurationsdaten umfassen Informationen zur Zuordnung von Diensten zu bereitstellenden Rechnereinheiten und zu Abhängigkeiten zwischen Diensten. Die Konfigurationsdaten werden durch einen Systemkonfigurationsdienst von einer Steuerungs- und Überwachungseinheit des Automatisierungssystems übernommen, überprüft und an Ziel-Steuerungseinheiten übermittelt.

Die Aufgabe der Erfindung besteht darin, ein Verfahren zum Konfigurieren eines Automatisierungssystems und eine Motorsteuerungseinrichtung bereitzustellen, die mit geringem Aufwand eine Anpassung der Aktorsteuerung auf den jeweils zu betreibenden Aktor ermöglichen.

Diese Aufgabe wird gemäß einem ersten Aspekt für das eingangs genannte Verfahren zur Konfiguration eines Automatisierungssystems mit den Merkmalen des Anspruchs 1 gelöst.

Die Kommunikationsverbindung zwischen der vorzugsweise als Mikrocomputer, insbesondere als Laptop, ausgebildeten Anzeige- und Eingabeeinrichtung und einer der Aktorsteuerungen, bei der es sich beispielsweise um eine Motorsteuerungseinrichtung zur Ansteuerung eines elektrischen Aktors, insbesondere eines Elektromotors handeln kann, ist drahtgebunden oder drahtlos vorgesehen. Bei einer drahtgebundenen Kommunikationsverbindung kann eine parallele oder serielle Schnittstelle der Anzeige- und Eingabevorrichtung mit einer entsprechend ausgestalteten Schnittstelle an der Aktorsteuerung mittels eines geeigneten Kabels verbunden werden. Bei einer drahtlosen Kommunikationsverbindung können die jeweils üblichen Drahtlosschnittstellen, die insbesondere auf der Aussenddung und dem Empfang von elektromagnetischen Wellen basieren, wie beispielsweise eine Infrarotschnittstelle, eine WLAN-Schnittstelle (wireless local area network), eine Bluetooth-Schnittstelle, eingesetzt werden.

Die auf der Anzeige- und Eingabeeinrichtung darzustellenden vorgebbaren Informationen sind in einer Speichereinrichtung der Aktorsteuerung abgelegt und werden von dort an die Anzeige- und Eingabeeinrichtung übergeben und dort dargestellt. Die Aktorsteuerung ist aufgrund ihrer technischen Auslegung zur Ansteuerung einer bestimmten Gruppe von elektrischen Aktoren vorgesehen. Hierzu ist in der Aktorsteuerung üblicherweise ein Steuerprogramm in Form einer Software abgelegt. Um den jeweils angeschlossenen Aktor möglichst energieeffizient und sicher betreiben zu können, müssen dem Steuerprogramm noch Detailinformationen über den angeschlossenen Aktor zur Verfügung gestellt werden. Diese Detailinformationen können beispielsweise der maximale Verstellweg und/oder die maximale Stromaufnahme des Aktors sein und werden auch als Aktorparameter bezeichnet. Da es ohnehin erforderlich ist, die Aktorsteuerung mit einem auf die jeweilige Gruppe von elektrischen Aktoren angepassten Steuerprogramm auszustatten, bedeutet es nur einen geringen Mehraufwand, zusätzlich zu dem Steuerprogramm ein weiteres Programmmodul in der Aktorsteuerung zu speichern, das es ermöglicht, die zur Ermittlung der korrekten Aktorparameter notwendigen vorgebbaren Informationen zu einem gegebenen Zeitpunkt an die angeschlossene Anzeige- und Eingabeeinrichtung bereitzustellen, um nach Eingabe der Aktorkennung und Auslesen der Aktorparameter aus dem Parameterspeicher eine entsprechende Konfiguration der Aktorsteuerung vornehmen zu können. Dementsprechend ist es nicht erforderlich, die vorgebbaren Informationen in der Steuerungseinrichtung zu speichern, die dazu vorgesehen ist, eine Vielzahl unterschiedlichster Aktoren und Sensoren anzusteuern und bei der eine Verwaltung der jeweiligen vorgebbaren Informationen für die große Vielfalt von anzuschließenden Aktorsteuerungen einen erheblichen Aufwand bedeuten würde.

Die Eingabe der Aktorkennung des wenigstens einen mit der Aktorsteuerung verbundenen Aktors an die Anzeige- und Eingabeeinrichtung kann durch einen Benutzer vorgenommen werden, der beispielsweise eine Seriennummer oder eine Typennummer, die dem mit der jeweiligen Aktorsteuerung verbundenen und von dieser anzusteuernden Aktor zugeordnet ist, manuell über eine Tastatur oder in anderer Weise eingibt. Alternativ kann vorgesehen werden, dass mit Hilfe einer in die Anzeige- und Eingabeeinrichtung integrierten oder dieser zugeordneten Kamera ein dem Aktor zugehöriges Etikett, das beispielsweise einen Barcode oder einen Data-Matrixcode trägt, oder der gesamte Aktor fotografiert wird, um dadurch die Aktorkennung für die Anzeige- und Eingabeeinrichtung zugänglich zu machen. Alternativ kann mit Hilfe der Anzeige- und Eingabeeinrichtung ein radiofrequenzauslesbares Etikett (RFID-Tag) oder ein anderer dem Aktor zugeordneter Speicher kontaktlos ausgelesen werden, in dem die Aktorkennung abgelegt ist.

Beim anschließenden Auslesen von Aktorparametern aus einem Parameterspeicher mittels der Anzeige- und Eingabeeinrichtung werden die vorab an anderer Stelle, beispielsweise beim Hersteller des Aktors auf einem Prüfstand für den jeweiligen Aktor ermittelten und für den Betrieb des Aktors durch die Aktorsteuerung erforderlichen Parameter anhand der Aktorkennung im Parameterspeicher identifiziert und an die Anzeige- und Eingabeeinrichtung bereitgestellt. Die ermittelten Aktorparameter können von der Anzeige- und Eingabeeinrichtung für den Benutzer auf einem Bildschirm zu Kontrollzwecken dargestellt werden.

Nachfolgend werden die ausgelesenen Aktorparameter von der Anzeige- und Eingabeeinrichtung an die Aktorsteuerung bereitgestellt und dort verarbeitet, so dass nunmehr bei Eintreffen eines entsprechenden Steuerbefehls von der Steuerungseinrichtung, die ihrerseits von der Maschinensteuerung angesteuert wird, eine Bewegung des Aktors hervorgerufen werden kann.

Da mit der Übergabe der Aktorparameter an die Aktorsteuerung üblicherweise der Konfigurationsvorgang beendet ist, kann anschließend die Kommunikationsverbindung zwischen der Anzeige- und Eingabeeinrichtung und der Aktorsteuerung getrennt werden.

Ferner ist vorgesehen, dass die vorgebbaren Informationen in der Aktorsteuerung in einem Webserver gespeichert sind und vom Webserver an einen in der Anzeige- und Eingabeeinrichtung ausführbaren Webbrowser bereitgestellt werden, der die vorgebbaren Informationen für einen Benutzer darstellt und die Eingabe der Aktorkennung ermöglicht und das Auslesen der Aktorparameter aus dem Parameterspeicher vornimmt und die Übertragung der Aktorparameter an die Aktorsteuerung bewirkt. Bei dem Webserver in der Aktorsteuerung handelt es sich vorzugsweise um ein Programmodul. Alternativ kann der Webserver als, insbesondere diskrete, elektronische Schaltung innerhalb der Aktorsteuerung ausgebildet sein. Der Webserver ist dazu vorgesehen, die vorgebbaren Informationen an die Anzeige- und Eingabeeinrichtung in einer Weise bereitzustellen, dass die Anzeige- und Eingabeeinrichtung unter Nutzung eines entsprechenden Anzeigeprogramms, insbesondere eines auch für den Abruf von Inhalten aus dem Internet vorgesehenen Webbrowsers, diese vorgebbaren Informationen darstellen kann. Der Webserver stellt also diejenigen Informationen bereit, die notwendig sind, um eine Eingabemaske auf dem Bildschirm der Anzeige- und Eingabeeinrichtung unter Nutzung des von der Anzeige- und Eingabeeinrichtung bereitgestellten Anzeigeprogramms anzuzeigen und eine Eingabe der Aktorkennung durch einen Benutzer zu ermöglichen.

Zudem ist vorgesehen, dass eine Kommunikation zwischen der Maschinensteuerung und der Steuerungseinrichtung gemäß einem vorgebbaren Leitebenen-Kommunikationsprotokoll und zwischen der Steuerungseinrichtung und den daran angeschlossene Aktorsteuerungen gemäß dem I/O-Link Kommunikationsprotokoll vorgenommen wird. Bei der Verwendung des I/O-Link Kommunikationsprotokolls, das lediglich eine sehr begrenzte, statische Datenübertragung zwischen der Steuerungseinrichtung und der Aktorsteuerung ermöglicht, ist es vorteilhaft, dass die für die Kommunikation erforderlichen elektronischen Bauelemente sehr kostengünstig sind.

Vorteilhafte Weiterbildungen des Verfahrens sind in den Unteransprüchen angegeben.

Bei einer Ausgestaltung des Verfahrens ist vorgesehen, dass die vorgebbaren Informationen generisch, insbesondere aktorneutral, sind. Die von der Aktorsteuerung an die Anzeige- und Eingabeeinrichtung bereitstellbaren Informationen sind dazu vorgesehen, eine Anzeige auf einem Bildschirm der Anzeige- und Eingabeeinrichtung zu bewirken. Mit Hilfe dieser Anzeige kann in einfacher Weise die Aktorkennung des an die Aktorsteuerung angeschlossenen Aktors von einem Benutzer eingegeben werden. Die von der Aktorsteuerung an die Anzeige- und Eingabeeinrichtung bereitgestellten, vorgebbaren Informationen sind demnach nicht auf einen bestimmten Aktor zugeschnitten, sondern für die gesamte Gruppe von Aktoren aufbereitet, die wahlweise an die jeweilige Aktorsteuerung angeschlossen werden kann und insoweit generisch bzw. aktorneutral oder aktorunspezifisch.

Bei einer weiteren Ausgestaltung des Verfahrens ist vorgesehen, dass die Anzeige- und Eingabeeinrichtung zur Ermittlung der Aktorparameter zeitweilig eine, insbesondere drahtlose, Datenkommunikationsverbindung mit einem Parameterspeicher herstellt, der auf einem räumlich entfernt angeordneten Datenträger, insbesondere abseits des Automatisierungssystems, gespeichert ist.

Der Parameterspeicher ist vorzugsweise als zentraler Speicher ausgebildet, der beispielsweise vom Hersteller der Aktorsteuerung und des Aktors betrieben und gepflegt wird. Somit können Endkunden, die die Aktorsteuerung und den daran angeschlossenen Aktor einsetzen wollen, über die Anzeige- und Eingabeeinrichtung auf den Parameterspeicher zugreifen und haben dabei die Gewähr, dass ihnen stets die aktuellen Aktorparameter zur Verfügung stehen. Vorzugsweise ist der Parameterspeicher als Bestandteil eines Webservers ausgebildet, der über ein internes Computernetzwerk oder über das Internet von der Anzeige- und Eingabeeinrichtung angesprochen und ausgelesen werden kann.

Bei einer weiteren Ausgestaltung des Verfahrens ist vorgesehen, dass nach einem Abruf der Aktorparameter aus dem Parameterspeicher und vor einer Übertragung der Aktorparameter an die Aktorsteuerung eine Abfrage einer Benutzereingabe zur Ergänzung und/oder Veränderung der Aktorparameter an der Anzeige- und Eingabeeinrichtung vorgenommen wird. Hierdurch kann der Benutzer eine individuelle Anpassung der Aktorparameter an die von ihm für den konkreten Nutzungsfall vorgesehenen Randbedingungen vornehmen. Wenn beispielsweise die Aktorparameter einen maximalen Bewegungsweg für den Aktor enthalten, kann der Benutzer diesen Bewegungsweg verringern, sofern dies für den konkreten Nutzungsfall von Vorteil ist. Vorzugsweise sind die von der Aktorsteuerung bereitgestellten vorgebbaren Informationen derart ausgebildet, dass eine einfache Einflussnahme des Benutzers auf die Aktorparameter an der Anzeige- und Eingabeeinrichtung gewährleistet ist.

Die Aufgabe der Erfindung wird gemäß einem zweiten Aspekt für eine Motorsteuerungseinrichtung, die zur Ansteuerung eines elektrischen Aktors, insbesondere eines Elektromotors, ausgebildet ist, mit den Merkmalen des Anspruchs 5 gelöst.

Hierbei ist vorgesehen, dass die Motorsteuerungseinrichtung eine Verarbeitungseinheit, die zur Verarbeitung von Steuerbefehlen einer übergeordneten, in einer Feldebene angesiedelten Steuerungseinrichtung und zur Bereitstellung von Steuersignalen an eine elektrische Leistungsschaltung ausgebildet ist, eine Kommunikationsschnittstelle, die zur Ankopplung an die Steuerungseinrichtung und zur Entgegennahme von Steuerbefehlen der Steuerungseinrichtung ausgebildet ist, eine elektrischen Leistungsschaltung, die mit der Verarbeitungseinheit verbunden ist und die zur Bereitstellung von elektrischer Leistung an einen ankoppelbaren elektrischen Aktor ausgebildet ist, umfasst und dass der Verarbeitungseinheit eine Konfigurationsschaltung zugeordnet ist, die eine Konfigurationsschnittstelle umfasst und die zur Ausgabe von vorgebbaren Informationen an eine mit der Konfigurationsschnittstelle koppelbare Anzeige- und Eingabeeinrichtung sowie zum Empfang und zur Verarbeitung von Aktorparametern ausgebildet ist, die von der Anzeige- und Eingabeeinrichtung bereitstellbar sind.

Die Verarbeitungseinheit wandelt die von der übergeordneten Steuerungseinrichtung übertragenen Steuerbefehle in Steuersignale um, die zur Bereitstellung an die elektrische Leistungsschaltung ausgebildet ist. Die elektrische Leistungsschaltung gibt entsprechend den bereitgestellten Steuersignalen die elektrische Leistung an den Aktor frei, damit dieser die gewünschten Bewegungen vollführen kann. Die Konfigurationsschaltung ist in Zusammenwirkung mit der Kommunikationsschnittstelle für die Parametrierung der Verarbeitungseinheit in Abhängigkeit vom angeschlossenen Aktor vorgesehen. Die Konfigurationsschaltung stellt die für den Parametrierungsvorgang notwendigen vorgebbaren Informationen an die zeitweilig ankoppelbare Anzeige- und Eingabeeinrichtung zur Verfügung. Ferner übermittelt die Konfigurationsschaltung die von der Anzeige- und Eingabeeinrichtung vom Parameterspeicher abgerufenen Aktorparameter an die Verarbeitungseinheit.

Dabei ist die Konfigurationsschaltung als Webserver ausgebildet, um bei einer Kommunikation mit der Anzeige- und Eingabeeinrichtung die Bereitstellung von generischen, aktorunspezifischen Informationen an die Anzeige- und Eingabeeinrichtung und einen Empfang von Aktorparametern von der Anzeige- und Eingabeeinrichtung gemäß einem vorgebbaren Kommunikationsprotokoll zu ermöglichen. Hierdurch kann in einfacher Weise auf ein typischerweise in der Anzeige- und Eingabeeinrichtung vorhandenes Programmodul, nämlich einen Webbrowser zugegriffen werden, um die gewünschte Konfiguration der Aktorsteuerung mit möglichst geringem Aufwand zu verwirklichen.

Die Kommunikationsschnittstelle ist gemäß dem I/O-Link Kommunikationsprotokoll ausgebildet. Hierdurch wird eine kostengünstige Kommunikationsmöglichkeit zwischen der Steuerungseinrichtung und der Aktorsteuerung bereitgestellt.

Bei einer Weiterbildung der Erfindung ist vorgesehen, dass die Konfigurationsschaltung für eine Bereitstellung von Aktorparametern, die an der Konfigurationsschnittstelle empfangen werden, an die Verarbeitungseinheit ausgebildet ist. Dabei kann die Konfigurationsschaltung derart ausgebildet sein, dass sie die empfangenen Aktorparameter in einem Datenformat aufbereitet, das die Verarbeitungsschaltung unmittelbar verarbeiten kann.

Eine vorteilhafte Ausführungsform der Erfindung ist in der Zeichnung dargestellt. Hierbei zeigt:

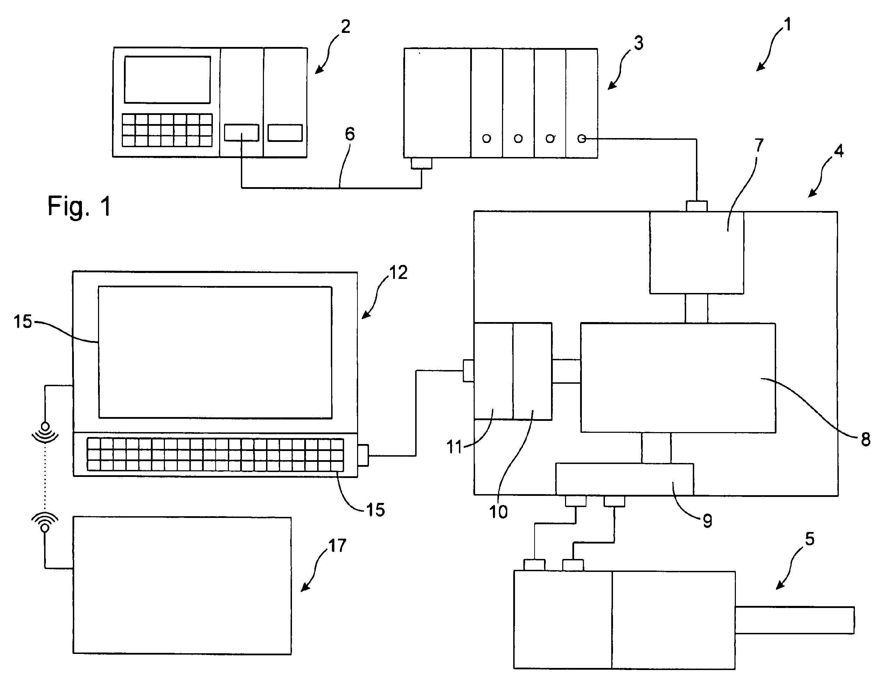

- Figur 1: eine schematische Darstellung eines Automatisierungssystems.

Ein in der Figur 1 dargestelltes Automatisierungssystem 1 umfasst eine Maschinensteuerung 2, eine mit der Maschinensteuerung 2 verbundene Steuerungseinrichtung 3, an der eine Aktorsteuerung 4 angeschlossen ist, sowie einen mit der Aktorsteuerung 4 verbunden Aktor 5.

Die Maschinensteuerung 2 ist gemäß den in der Automatisierungstechnik üblichen Begrifflichkeiten in einer Leitebene angesiedelt und ist für die Koordination einer Vielzahl von nicht dargestellten Steuerungseinrichtungen vorgesehen. Die Maschinensteuerung 2 stellt Steuerbefehle an die Steuerungseinrichtung 3 zur Verfügung, wenn ein mit der Steuerungseinrichtung über die Aktorsteuerung 4 verbundener Aktor 5 eine Bewegung ausführen soll. Die Steuerungseinrichtung 3, die Aktorsteuerung 4 und der Aktor 5 bilden dabei gemäß den in der Automatisierungstechnik üblichen Begrifflichkeiten eine Feldebene, in der die Steuerbefehle in Aktorbewegungen umgesetzt werden.

Exemplarisch ist die Maschinensteuerung 2 als speicherprogrammierbare Steuerung (SPS) ausgeführt und ist über eine Kommunikationsverbindung 6, insbesondere ein Bussystem, mit der Steuerungseinrichtung 3 verbunden. Die Steuerungseinrichtung 3 wird in der Feldebene auch als Master bezeichnet, da sie die Steuerbefehle der Maschinensteuerung 2 entgegennimmt und in Steuersignale für die angeschlossenen Aktorsteuerungen 4 und gegebenenfalls vorgesehene, nicht dargestellte Sensoreinheiten umwandelt. Anhand der Steuersignale für die Aktorsteuerung 4, die in der Feldebene auch als Device bezeichnet wird, wird diese in die Lage versetzt, gezielt elektrische Leistung an den exemplarisch als elektrischen Spindelmotor ausgebildeten Aktor 5 zur Verfügung zu stellen und somit eine Bewegung des Aktors 5 in einer gewünschten Richtung um einen gewünschten Betrag vorzugeben.

Für die Kommunikation mit der Steuerungseinrichtung 3 umfasst die Aktorsteuerung 4 eine Kommunikationsschnittstelle 7, die zur Entgegennahme von Steuerbefehlen der Steuerungseinrichtung 4 ausgebildet ist. Exemplarisch ist die Kommunikationsschnittstelle 7 als I/O-Link-Schnittstelle ausgebildet, die mit einer korrespondierend an der Steuerungseinrichtung 3 vorgesehenen I/O-Link-Schnittstelle, insbesondere bidirektional, kommunizieren kann. Die Kommunikationsschnittstelle 7 ist innerhalb der Aktorsteuerung 5 mit einer Verarbeitungseinheit 8 verbunden, die zur Verarbeitung der Steuerbefehle und zur Bereitstellung von Steuersignalen an eine elektrische Leistungsschaltung 9 ausgebildet ist. Die Leistungsschaltung 9, die auch als Endstufe bezeichnet wird, stellt in Abhängigkeit von den eintreffenden Steuersignalen elektrische Leistung an den Aktor 5 zur Verfügung.

Ferner ist der Verarbeitungseinheit 8 eine Konfigurationsschaltung 10 zugeordnet, die eine Konfigurationsschnittstelle 11 umfasst und die zur Ausgabe von vorgebbaren Informationen an eine mit der Konfigurationsschnittstelle 11 koppelbare Anzeige- und Eingabeeinrichtung 12 sowie zum Empfang und zur Verarbeitung von Aktorparametern ausgebildet ist, die von der Anzeige- und Eingabeeinrichtung 12 bereitstellbar sind.

Bei der Anzeige- und Eingabeeinrichtung 12 handelt es sich exemplarisch um ein Laptop, das einen Bildschirm 15 und eine Tastatur 16 sowie einen nicht näher dargestellten Mikrorechner umfasst und das Informationen auf dem Bildschirm 15 darstelle kann und Eingaben eines Benutzers, die über die Tastatur 16 vorgenommen werden, verarbeiten kann.

Exemplarisch ist die Konfigurationsschnittstelle 11 für eine Datenübertragung über eine Kabelverbindung mit der Anzeige- und Eingabeeinrichtung 12 ausgebildet. Alternativ kann auch eine nicht dargestellte Drahtlosverbindung, insbesondere nach Kommunikationsstandards wie WLAN oder Bluetooth, für die Kommunikation zwischen der Aktorsteuerung 4 und der Anzeige- und Eingabeeinrichtung 12 vorgesehen sein.

Die Konfiguration der Aktorsteuerung 4 kann in der nachstehend näher beschriebenen Weise vorgenommen werden. In einem ersten Schritt werden die einzelnen Komponenten des Automatisierungssystems 1 mit den exemplarisch vorgesehenen Kabelverbindungen miteinander gekoppelt. Somit ist eine Übertragung von Steuerbefehlen zwischen der Maschinensteuerung 2 und der Steuerungseinrichtung 3 sowie zwischen der Steuerungseinrichtung 3 und der Aktorsteuerung 4 ermöglicht. Eine Inbetriebnahme des Aktors 5 sollte jedoch noch nicht erfolgen, da hierfür die entsprechenden Aktorparameter noch nicht in die Aktorsteuerung 4 eingespeist sind.

Für eine Bereitstellung der Aktorparameter an die Aktorsteuerung 4 ist vorgesehen, die Anzeige- und Eingabeeinrichtung 12 an die Konfigurationsschnittstelle 11 der Aktorsteuerung 4 anzuschließen, was vorliegend exemplarisch mit Hilfe eines Kabels erfolgt. Nach dem Anschließen der Anzeige- und Eingabeeinrichtung 12 an die Konfigurationsschnittstelle 11 werden von der Konfigurationsschaltung 10 vorgebbare, generische, also aktorunspezifische Informationen an die Anzeige- und Eingabeeinrichtung 12 übertragen. Dabei arbeitet die Konfigurationsschaltung 10 als Webserver und bewirkt die Anzeige einer Eingabemaske auf dem Bildschirm 15 der Anzeige- und Eingabeeinrichtung 12 mit Hilfe eines in der Anzeige- und Eingabeeinrichtung 12 ablaufenden Webbrowsers.

Zunächst erfolgt eine Eingabeaufforderung, mit der ein Benutzer dazu aufgefordert wird, eine Aktorkennung wie beispielsweise eine Typennummer oder eine Seriennummer des Aktors 5 einzugeben. Sobald die Aktorkennung eingegeben wurde, erfolgt durch den in der Anzeige- und Eingabeeinrichtung 12 ablaufenden Webbrowser ein Aufbau einer Kommunikationsverbindung zu einem Parameterspeicher 17, bei dem es sich exemplarisch um eine elektronische Datenbank handelt, die auf einem externen Webserver abläuft. Bei der dargestellten Ausführungsform ist der Aufbau einer drahtlosen Kommunikationsverbindung zwischen der Anzeige- und Eingabeeinrichtung 12 und dem Parameterspeicher 17 vorgesehen. Der Parameterspeicher 17 stellt nach Eintreffen der Anfrage der Anzeige- und Eingabeeinrichtung 12 und nach Bereitstellung der Aktorkennung die gespeicherten, auf den Aktor 5 zugeschnittene Aktorparameter an die die Anzeige- und Eingabeeinrichtung 5 zur Verfügung.

Gegebenenfalls sind die von der Aktorsteuerung 5 vorgegebenen Informationen derart ausgebildet, dass sie nach dem Auslesen der Aktorparameter eine weitere Benutzereingabe abfragen, um beispielsweise eine Anpassung der Aktorparameter an bestimmte Randbedingungen für den Aktor 5 vornehmen zu können. Anschließend werden die Aktorparameter über die Konfigurationsschnittstelle 11 an die Konfigurationsschaltung 10 übertragen und von dort an die Verarbeitungseinheit 8 weitergeleitet. Dort können die Aktorparameter für die korrekte und effiziente Ansteuerung des Aktors 5 herangezogen werden. Exemplarisch kann vorgesehen sein, dass nach Trennen der Kommunikationsverbindung zwischen der Aktorsteuerung 4 und der Anzeige- und Eingabeeinrichtung 12 sowie nach Verarbeitung der Aktorparameter in der Verarbeitungseinheit 8 ein Freigabesignal über die Kommunikationsschnittstelle 7 an die Steuerungseinrichtung 3 ausgegeben wird, um die Bereitschaft der Aktorsteuerung 5 zur Entgegennahme und Ausführung von Steuersignalen der Steuerungseinrichtung 3 zu signalisieren.

Alternativ zu der vorstehend beschriebenen, exemplarischen Ausführungsform eines Automatisierungssystems 1 kann vorgesehen sein, dass die Konfigurationsschaltung als Programmbestandteil eins in der Verarbeitungseinrichtung ablaufenden Programms und nicht als diskrete elektronische Schaltung ausgebildet ist. In gleicher Weise gilt dies auch für die Kommunikationsschnittstelle und die Konfigurationsschnittstelle. Die Leistungsschaltung kann gemeinsam mit der Verarbeitungsschaltung auf einer einzigen Leiterplatte angeordnet sein oder als diskrete elektrische Schaltung aufgebaut sein.

Zusätzlich zu der vorstehend beschriebenen Konfiguration der Aktorsteuerung kann vorsehen sein, dass die Konfigurationsschaltung auch vorgebbare Diagnosefunktionen umfasst, die in gleicher Weise wie die vorgebbaren Informationen an die Anzeige- und Eingabeeinrichtung übertragen werden können, um beispielsweise eine Diagnose der Aktorsteuerung und/oder des Aktors durchführen zu können.

## Patentansprüche

1. Verfahren zum Konfigurieren eines Automatisierungssystems (1), das eine Maschinensteuerung (2), wenigstens eine mit der Maschinensteuerung (2) verbundene Steuerungseinrichtung (3), an die wenigstens eine Steuerungseinrichtung (3) angeschlossene Aktorsteuerungen (4), insbesondere Motorsteuerungseinrichtungen, sowie mit den Aktorsteuerungen (4) verbunde Aktoren (5) umfasst, wobei die Maschinensteuerung (2) in einer Leitebene angesiedelt ist und Steuerbefehle an die Steuerungseinrichtung (3) ausgibt und wobei die Steuerungseinrichtung (3) mit den Aktorsteuerungen (4) und den damit verbundenen Aktoren (5) eine Feldebene bildet, in der die Steuerbefehle in Aktorbewegungen umgesetzt werden, mit den Schritten: Erstellen einer Kommunikationsverbindung zwischen einer Anzeige- und Eingabeeinrichtung (12) und einer der Aktorsteuerungen (4), Bereitstellen von vorgebbaren Informationen von der Aktorsteuerung (4) an die Anzeige- und Eingabeeinrichtung (12), Darstellen der vorgebbaren Informationen mittels der Anzeige- und Eingabeeinrichtung (12), Eingeben einer Aktorkennung des wenigstens einen mit der Aktorsteuerung (4) verbundenen Aktors (5) an die Anzeige- und Eingabeeinrichtung (12), Auslesen von Aktorparametern aus einem Parameterspeicher (17) mittels der Anzeige- und Eingabeeinrichtung (12) anhand der Aktorkennung, Bereitstellen der ausgelesenen Aktorparameter von der Anzeige- und Eingabeeinrichtung (12) an die Aktorsteuerung (4), Verarbeitung der Aktorparameter in der Aktorsteuerung (4), Trennen der Kommunikationsverbindung zwischen der Anzeige- und Eingabeeinrichtung (12) und der Aktorsteuerung (4), wobei die vorgebbaren Informationen in der Aktorsteuerung (4) in einem Webserver gespeichert sind und vom Webserver an einen in der Anzeige- und Eingabeeinrichtung (12) ausführbaren Webbrowser bereitgestellt werden, der die vorgebbaren Informationen für einen Benutzer darstellt und die Eingabe der Aktorkennung ermöglicht und das Auslesen der Aktorparameter aus dem Parameterspeicher (17) vornimmt und die Übertragung der Aktorparameter an die Aktorsteuerung (5) bewirkt und wobei eine Kommunikation zwischen der Maschinensteuerung (2) und der Steuerungseinrichtung (3) gemäß einem vorgebbaren Leitebenen-Kommunikationsprotokoll und zwischen der Steuerungseinrichtung (3) und den daran angeschlossene Aktorsteuerungen (4) gemäß dem I/O-Link Kommunikationsprotokoll vorgenommen wird.

2. Verfahren nach Anspruch 1, **dadurch gekennzeichnet, dass** die vorgebbaren Informationen generisch, insbesondere aktorneutral, sind.

3. Verfahren nach Anspruch 1 oder 2, **dadurch gekennzeichnet, dass** die Anzeige- und Eingabeeinrichtung (12) zur Ermittlung der Aktorparameter zeitweilig eine, insbesondere drahtlose, Datenkommunikationsverbindung mit einem Parameterspeicher (17) herstellt, der auf einem räumlich entfernt angeordneten Datenträger, insbesondere abseits des Automatisierungssystems (1), gespeichert ist.

4. Verfahren nach einem der vorhergehenden Ansprüche, **dadurch gekennzeichnet, dass** nach einem Abruf der Aktorparameter aus dem Parameterspeicher (17) und vor einer Übertragung der Aktorparameter an die Aktorsteuerung (5) eine Abfrage einer Benutzereingabe zur Ergänzung und/oder Veränderung der Aktorparameter an der Anzeige- und Eingabeeinrichtung (12) vorgenommen wird.

5. Motorsteuerungseinrichtung zur Ansteuerung eines elektrischen Aktors (5), insbesondere eines Elektromotors, mit einer Verarbeitungseinheit (8), die zur Verarbeitung von Steuerbefehlen einer übergeordneten, in einer Feldebene angesiedelten Steuerungseinrichtung (3) und zur Bereitstellung von Steuersignalen an eine elektrische Leistungsschaltung (9) ausgebildet ist, mit einer Kommunikationsschnittstelle (7), die zur Ankopplung an die Steuerungseinrichtung (3) und zur Entgegennahme von Steuerbefehlen der Steuerungseinrichtung (3) ausgebildet ist, mit einer elektrischen Leistungsschaltung (9), die mit der Verarbeitungseinheit (8) verbunden ist und die zur Bereitstellung von elektrischer Leistung an einen ankoppelbaren elektrischen Aktor (5) ausgebildet ist, wobei der Verarbeitungseinheit (8) eine Konfigurationsschaltung (10) zugeordnet ist, die eine Konfigurationsschnittstelle (11) umfasst und die zur Ausgabe von vorgebbaren Informationen an eine mit der Konfigurationsschnittstelle (11) koppelbare Anzeige- und Eingabeeinrichtung (12) sowie zum Empfang und zur Verarbeitung von Aktorparametern ausgebildet ist, die von der Anzeige- und Eingabeeinrichtung (12) bereitstellbar sind und wobei die Konfigurationsschaltung (10) als Webserver ausgebildet ist, um bei einer Kommunikation mit der Anzeige- und Eingabeeinrichtung (12) die Bereitstellung von generischen, aktorunspezifischen Informationen an die Anzeige- und Eingabeeinrichtung (12) und einen Empfang von Aktorparametern von der Anzeige- und Eingabeeinrichtung (12) gemäß einem vorgebbaren Kommunikationsprotokoll zu ermöglichen und wobei die Kommunikationsschnittstelle (7) gemäß dem I/O-Link Kommunikationsprotokoll ausgebildet ist.

6. Motorsteuerungseinrichtung nach Anspruch 5, **dadurch gekennzeichnet, dass** die Konfigurationsschaltung (10) für eine Bereitstellung von Aktorparametern, die an der Konfigurationsschnittstelle (11) empfangen werden, an die Verarbeitungseinheit (8) ausgebildet ist.

## Claims

1. Method for the configuring of an automation system (1) which includes a machine control (2), at least one control unit (3) connected to the machine control (2), actuator controls (4), in particular motor control devices, connected to the control unit or units (3), also actuators (5) connected to the actuator controls (4), wherein the machine control (2) is located in a command level and outputs control commands to the control unit (3) and wherein the control unit (3) with the actuator controls (4) and the actuators (5) connected thereto form a field level in which the control commands are converted into actuator movements, with the steps: creation of a communications link between a display and input device (12) and one of the actuator controls (4), provision of presettable information from the actuator control (4) to the display and input device (12), presentation of the presettable information by means of the display and input device (12), input of an actuator code of the actuator or actuators (5) connected to the actuator control (4) to the display and input device (12), readout of actuator parameters from a parameter memory (17) by means of the display and input device (12) with the aid of the actuator code, provision of the selected actuator parameters from the display and input device (12) to the actuator controls(4), processing of the actuator parameters in the actuator control (4), severing of the communications link between the display and input device (12) and the actuator control (4), wherein the presettable information in the actuator control (4) is stored in a web server and is provided by the web server to a web browser which may be executed in the display and input device (12), which displays the presettable information for a user and permits input of the actuator code and undertakes readout of the actuator parameters from the parameter memory (17) and effects transmission of the actuator parameters to the actuator control (4) and wherein a communication is made between the machine control (2) and the control unit (3) in accordance with a presettable command level communication protocol and between the control unit (3) and the actuator controls (4) connected thereto in accordance with the I/O-link communication protocol.

2. Method according to claim 1, **characterised in that** the presettable information is generic, in particular actuator-neutral.

3. Method according to claim 1 or 2, **characterised in that** the display and input device (12), to determine the actuator parameters, creates a temporary, in particular wireless, data communication link with a parameter memory (17) which is stored on a spatially remote data carrier, in particular outside the automation system (1).

4. Method according to any of the preceding claims, **characterised in that**, after retrieval of the actuator parameters from the parameter memory (17) and before transmission of the actuator parameters to the actuator controls (4), a request is made for a user input to supplement and/or change the actuator parameters at the display and input device (12).

5. Motor control device for the control of an electrical actuator (5), in particular an electric motor, with a processing unit (8) which is designed for the processing of control commands of a higher-level control unit (3) located in a field level and for the provision of control signals to an electrical power circuit (9), with a communications interface (7) which is designed for coupling to the control unit (3) and for the receipt of control commands of the control unit (3), with an electrical power circuit (9) which is connected to the processing unit (8) and which is designed for the provision of electrical power to an electrical actuator (5) which may be connected, wherein the processing unit (8) is assigned a configuration circuit (10) which includes a configuration interface (11) and is designed to output presettable information to a display and input device (12) which may be connected to the configuration interface (11), and for the receipt and processing of actuator parameters which may be provided by the display and input device (12), and wherein the configuration circuit (10) is in the form of a web server, in order to facilitate, in the course of communication with the display and input device (12), the provision of generic, non-actuator-specific information to the display and input device (12) and the receipt of actuator parameters from the display and input device (12) in accordance with a presettable communications protocol, and wherein the communications interface (7) is designed in accordance with the I/O-link communications protocol.

6. Motor control device according to claim 5, **characterised in that** the configuration circuit (10) is designed for the provision to the processing unit (8) of actuator parameters which are received at the communications interface (11).

## Revendications

1. Procédé de configuration d'un système d'automatisation (1) qui comprend une commande de machine (2), au moins un dispositif de commande (3) relié à la commande de machine (2), des commandes d'actionneur (4) branchés à l'au moins un dispositif de commande (3), en particulier des dispositifs de commande de moteur, ainsi que des actionneurs (5) reliés aux commandes d'actionneur (4), dans lequel la commande de machine (2) est implantée dans un niveau maître et donne des instructions de commande au dispositif de commande (3) et dans lequel le dispositif de commande (3) forme avec les commandes d'actionneur (4) et les actionneurs (5) reliés à celles-ci un niveau terrain dans lequel les instructions de commande sont converties en des mouvements d'actionneur, avec les étapes suivantes : établissement d'une liaison de communication entre un dispositif d'affichage et d'entrée (12) et une des commandes d'actionneur (4), fourniture d'informations prédéfinissables par la commande d'actionneur (4) au dispositif d'affichage et d'entrée (12), représentation des informations prédéfinissables au moyen du dispositif d'affichage et d'entrée (12), entrée d'un indicatif d'actionneur de l'au moins un actionneur (5), relié à la commande d'actionneur (4), dans le dispositif d'affichage et d'entrée (12), lecture de paramètres d'actionneur depuis une mémoire de paramètres (17) au moyen du dispositif d'affichage et d'entrée (12) à l'aide de l'indicatif d'actionneur, fourniture des paramètres d'actionneur choisis, par le dispositif d'affichage et d'entrée (12) à la commande d'actionneur (4), traitement des paramètres d'actionneur dans la commande d'actionneur (4), coupure de la liaison de communication entre le dispositif d'affichage et d'entrée (12) et la commande d'actionneur (4), dans lequel les informations prédéfinissables dans la commande d'actionneur (4) sont stockées dans un serveur Web et sont fournies par le serveur Web à un navigateur Web, exécutable dans le dispositif d'affichage et d'entrée (12), qui représente les informations prédéfinissables pour un utilisateur et permet l'entrée de l'indicatif d'actionneur et réalise la lecture des paramètres d'actionneur de la mémoire de paramètres (17) et provoque la transmission des paramètres d'actionneur à la commande d'actionneur (5) et dans lequel une communication est réalisée entre la commande de machine (2) et le dispositif de commande (3) selon un protocole de communication prédéfinissable de niveau maître et entre le dispositif de commande (3) et les commandes d'actionneur (4) branchés à ce dernier selon un protocole de communication de liaison d'E/S.

2. Procédé selon la revendication 1, **caractérisé en ce que** les informations prédéfinissables sont génériques, en particulier neutres en ce qui concerne les actionneurs.

3. Procédé selon la revendication 1 ou 2, **caractérisé en ce que** le dispositif d'affichage et d'entrée (12) pour la détermination des paramètres d'actionneur génère temporairement une liaison de communication de données, en particulier sans fil, avec une mémoire de paramètres (17) qui est stockée sur un support de données disposé à distance, en particulier à l'écart du système d'automatisation (1).

4. Procédé selon l'une quelconque des revendications précédentes, **caractérisé en ce que**, après un appel des paramètres d'actionneur de la mémoire de paramètres (17) et avant une transmission des paramètres d'actionneur à la commande d'actionneur (5) est réalisée une interrogation d'une entrée d'utilisateur pour compléter et/ou modifier les paramètres d'actionneur au niveau du dispositif d'affichage et d'entrée (12).

5. Dispositif de commande de moteur pour la commande d'un actionneur électrique (5), en particulier d'un moteur électrique, avec une unité de traitement (8) qui est conçue pour le traitement d'instructions de commande d'un dispositif de commande (3) de niveau supérieur, implanté dans un niveau terrain et pour la fourniture de signaux de commande à un circuit électrique de puissance (9), avec une interface de communication (7) qui est conçue pour le couplage au dispositif de commande (3) et pour la réception d'instructions de commande du dispositif de commande (3), avec un circuit électrique de puissance (9) qui est relié à l'unité de traitement (8) et qui est conçu pour la fourniture d'une puissance électrique à un actionneur (5) électrique pouvant être couplé, dans lequel l'unité de traitement (8) est associée à un circuit de configuration (10) qui comprend une interface de configuration (11) et qui est conçu pour la sortie d'informations prédéfinissables à un dispositif d'affichage et d'entrée (12) pouvant être couplé à l'interface de configuration (11) ainsi que pour la réception et le traitement de paramètres d'actionneur qui peuvent être fournis par le dispositif d'affichage et d'entrée (12) et dans lequel le circuit de configuration (10) est conçu en tant que serveur Web pour permettre, lors d'une communication avec le dispositif d'affichage et d'entrée (12), la fourniture d'informations génériques, neutres en ce qui concerne les actionneurs, au dispositif d'affichage et d'entrée (12) et une réception de paramètres d'actionneur par le dispositif d'affichage et d'entrée (12) selon un protocole de communication prédéfinissable, et dans lequel l'interface de communication (7) est conçue selon le protocole de communication de liaison d'E/S.

6. Dispositif de commande de moteur selon la revendication 5, **caractérisé en ce que** le circuit de configuration (10) est conçu pour une fourniture de paramètres d'actionneur, qui sont reçus dans l'interface de configuration (11), à l'unité de traitement (8).
